# DEMANDE DE BREVET EUROPEEN

(11) **EP 4 123 204 A1**
(43) Date de publication de la demande: **25.01.2023**
(21) Numéro de dépôt: 22185388.0
(22) Date de dépôt: 18.07.2022
(51) Int. Cl.: F16L 3/123, F16L 55/035

(54) **ENSEMBLE DE COLLIER DE FIXATION D'UN ARTICLE TUBULAIRE SUR UN SUPPORT EXTERNE**

(30) Priorité: 22.07.2021 FR 2107952
(71) Demandeur: Akwel Sweden AB, 43215 Varberg (SE)
(72) Inventeur: LOFGREN, Cécilia, 43295 Varberg (SE); OLOFSSON, Jan, 43238 Varberg (SE)
(74) Mandataire: Martin, Marie-Aude

(57) **Abrégé**

Cet ensemble (10) comprend un insert (20) déformable pour définir une cavité sensiblement cylindrique pour recevoir l'article tubulaire (100) et un corps métallique d'enveloppe délimitant un siège sensiblement à l'intérieur duquel l'insert (20) est enveloppé autour de l'article, l'insert comprenant une projection externe (28) qui s'étend radialement vers l'extérieur de l'insert (20) et configurée pour coopérer avec un orifice correspondant formé dans le siège du corps métallique de façon à positionner l'insert à l'intérieur du corps, la projection (28) comprend une base attachée à l'insert (20) et une tête (32) pourvue en périphérie de la tête d'un rebord saillant de clipsage configuré pour retenir l'insert (20) à l'intérieur du corps métallique d'enveloppe (22). L'insert comprend, à la base de la projection, un trou traversant s'étendant à l'aplomb du rebord de clipsage.

## Description

### Domaine technique.

La présente invention concerne un ensemble de collier de serrage et de fixation sur un support d'au moins un article tubulaire, par exemple un tuyau à travers lequel circule un fluide, tel qu'un tuyau d'un système de carburant, d'un système de freinage, d'un système de refroidissement ou autre dans un véhicule automobile ou similaire.

De tels colliers de fixation ou de serrage sont largement utilisés pour fixer des éléments tubulaires, tels que des tuyaux, à diverses structures. Un exemple d'utilisation bien connu consiste à fixer un tuyau à un moteur ou à un châssis dans un véhicule. Habituellement, un ensemble de collier de fixation comprend, d'une part, un élément tubulaire, comportant au moins une partie de tuyau entourée d'un manchon élastomère, et d'autre part, un corps enveloppant réalisé en une bande métallique qui entoure et serre l'élément tubulaire autour du manchon.

Le serrage de l'élément tubulaire dans le support est habituellement assuré en formant le corps métallique enveloppant avec une forme générale en U incurvée de manière à créer un évidement essentiellement cylindrique situé entre deux branches émergentes, et puis en insérant l'élément tubulaire dans l'évidement, et enfin en pressant et en sécurisant les branches l'une contre l'autre, avec des moyens de fixation supplémentaires tels qu'une vis, un rivet, une languette pliée, un fil de soudure ou analogue, de manière à serrer fermement le sous-ensemble tubulaire à l'intérieur de l'évidement.

### Technique antérieure.

Il est connu, en particulier grâce à la publication de la demande de brevet US 5 806 813, un ensemble de collier de serrage pour le montage de tubes, en particulier de tubes circulaires sur un élément de support. L'ensemble de collier comprend un élément annulaire généralement en forme de C formant un corps de serrage et un élément de fixation qui est relié au corps de serrage par soudage. Avec l'utilisation d'une bague d'engagement en forme de C, le support peut être ajusté radialement et linéairement sur le tube pour assurer un alignement correct.

La fonction de l'élément de fixation est de maintenir la tension dans le corps de serrage une fois que le corps de serrage est positionné autour du tube. Cet assemblage présente de nombreux inconvénients.

D'une part, cet assemblage nécessite une opération de soudage pour attacher le corps de serrage et l'élément de montage ensemble. De plus, le corps de serrage offre peu de flexibilité pour s'adapter aux différents diamètres de tubes. Enfin, l'ensemble de collier se présente en deux pièces qui doivent être soudées ensemble de sorte que des précautions et outils spécifiques sont nécessaires. Il en résulte un temps d'installation augmenté.

Une autre méthode classique pour monter un ensemble de collier de fixation ou serrage autour d'un article tubulaire, est décrite dans la publication du brevet US 9, 482, 369 B2. Cette méthode consiste en l'assemblage d'un collier métallique et d'un manchon pour former un ensemble de collier de serrage. Le collier métallique est formé par une forme incurvée qui définit une cavité et inclut une fente transversale.

Le manchon est reçu à l'intérieur de la cavité du collier et comprend une projection oblongue s'étendant radialement vers l'extérieur du manchon. Cette projection est reçue par un orifice ménagé dans le collier métallique pour permettre un positionnement du manchon relativement au collier métallique. L'utilisateur courbe le collier métallique autour du manchon jusqu'à atteindre une position fermée pour sécuriser l'ensemble de collier autour du tube. La position fermée du collier métallique est maintenu par déformation plastique du collier métallique et sans aucune fixation additionnelle.

### Résumé de l'invention

L'invention a pour but de fournir un ensemble de collier de serrage qui ne présente pas les inconvénients mentionnés ci-dessus des documents de l'art antérieur. L'invention propose un ensemble de collier de fixation robuste qui tient fermement l'article tubulaire sans aucune opération de soudage, brasage ou autres éléments de fixation.

A cet effet, l'invention a pour objet un ensemble de collier de fixation d'au moins un article tubulaire à un support externe, du type comprenant un insert déformable pour définir une cavité sensiblement cylindrique configurée pour recevoir l'article tubulaire et un corps métallique d'enveloppe délimitant un siège sensiblement à l'intérieur duquel l'insert est enveloppé autour de l'article, l'insert comprenant une projection externe qui s'étend radialement vers l'extérieur de l'insert et est configurée pour coopérer avec un orifice correspondant formé dans le siège du corps métallique de façon à positionner l'insert à l'intérieur du corps, la projection comprend une base attachée à l'insert et une tête connectée à la base par une portion de liaison d'extension radiale et pourvue en périphérie de la tête d'un rebord saillant de clipsage configuré pour retenir l'insert à l'intérieur du corps métallique d'enveloppe, **caractérisé en ce que** l'insert comprend, à la base de la projection, un trou traversant s'étendant à l'aplomb du rebord de clipsage.

Le trou traversant est commodément formé dans l'insert pour permettre le moulage par injection du rebord saillant sans nécessiter le recours à des moules à injection nécessitant des accessoires complexes. Un des problèmes de l'art antérieur surmonté par l'invention est en particulier de permettre le moulage de l'insert sans avoir à utiliser des glissières mobiles supplémentaires pour former la zone localisée sous le ou les rebords de clipsage.

Par ailleurs, l'ensemble de collier de fixation ou de serrage selon la présente invention surmonte les problèmes décrits ci-dessus en fournissant un insert déformable qui est facile à produire et qui est facile à pré-assembler avec le corps de l'enveloppe.

Dans un autre mode de réalisation de l'invention, la portion de liaison connecte radialement la tête selon un profil externe dépourvu de tout bord ou épaulement.

Dans un autre mode de réalisation de l'invention, l'ensemble comprenant deux bords saillants de clipsage en vis-à-vis l'un de l'autre et deux trous traversants correspondants formés dans ladite base.

Dans un autre mode de réalisation de l'invention, les deux trous traversants latéraux sont réunis en un seul trou traversant s'étendant sous la tête.

Dans un autre mode de réalisation de l'invention, la portion de liaison comprend deux portions de jupes flexibles disposées autour du trou traversant et en vis-à-vis l'une de l'autre.

Dans un autre mode de réalisation de l'invention, la portion de liaison se présente sous la forme d'une membrane de jonction de la tête et de la base de l'insert. La portion flexible en forme de membrane peut s'étirer et fléchir pendant l'insertion pour permettre aux bords de flexion de venir s'accrocher au travers de l'orifice ou fente ménagée dans le corps d'enveloppe.

Dans un autre mode de réalisation de l'invention, la tête est formée par un corps creux.

Dans un autre mode de réalisation de l'invention, la tête s'étend sensiblement dans le prolongement radial du trou traversant et la partie de liaison relie la tête à la base en périphérie du trou traversant.

Dans un autre mode de réalisation de l'invention, la tête est supportée à distance radiale de ladite base par la partie de liaison et s'étend sensiblement sur toute la surface du trou traversant.

Dans un autre mode de réalisation de l'invention, la tête de la projection présente une forme de solide avec quatre côtés latéraux, deux côtés opposés se prolongeant latéralement par deux bords saillants de clipsage et les deux autres côtés opposés se prolongeant latéralement par deux tronçons flexibles de jupe formant la portion de liaison.

Dans un autre mode de réalisation de l'invention, l'insert est élastiquement déformable entre une position ouverte non déformée et une position fermée déformée, l'insert présentant en position ouverte une forme générale semi-tubulaire de section en U ayant un fond et des parois latérales, la projection étant portée par le fond de l'insert.

### Brève description des dessins

D'autres caractéristiques et avantages de l'invention apparaîtront à la lumière de la description qui suit, faite en référence aux dessins annexes dans lesquels :
**Fig.1**

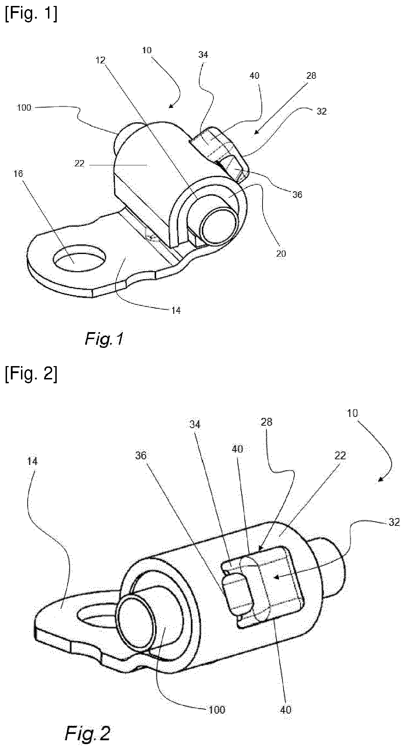

   [fig.1] représente une vue en perspective d'un ensemble de fixation d'un article tubulaire sur un support selon un premier point de vue ;
**Fig.2**
   [fig.2] représente une vue en perspective de l'ensemble de fixation selon un deuxième point de vue ;
**Fig.3**

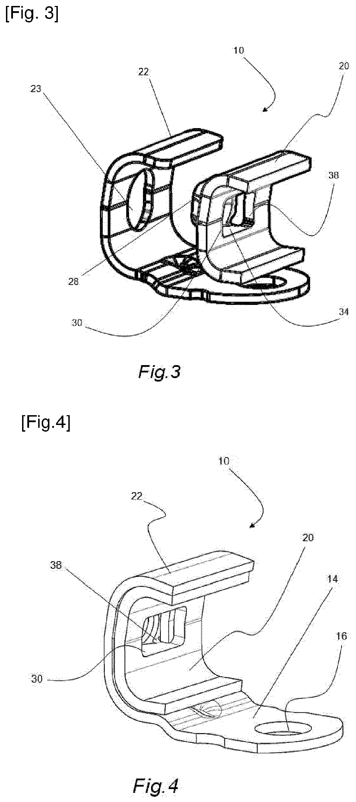

   [fig.3] représente une vue en perspective de l'ensemble de fixation dans une configuration non assemblée;
**Fig.4**
   [fig.4] représente une vue en perspective de l'ensemble de fixation dans une configuration pré-assemblée selon un premier point de vue ;
**Fig.5**

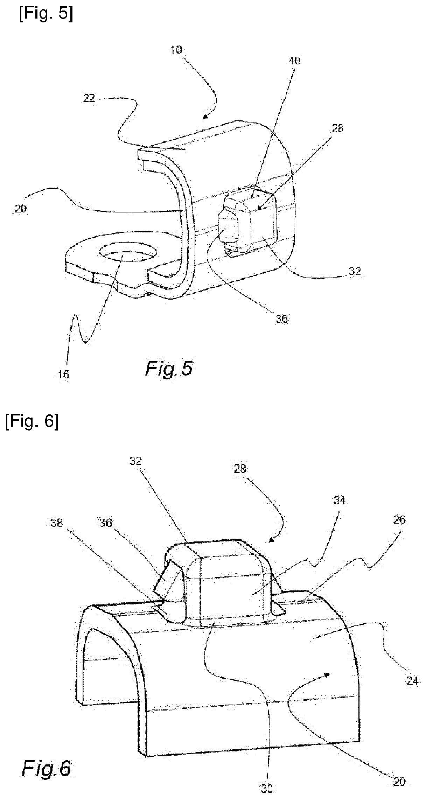

   [fig.5] représente une vue en perspective de l'ensemble de fixation de la figure 4 selon un deuxième point de vue ;
**Fig.6**
   [fig.6] représente une vue en perspective de l'insert de l'ensemble de fixation représentée sur la figure 1 ;
**Fig.7**

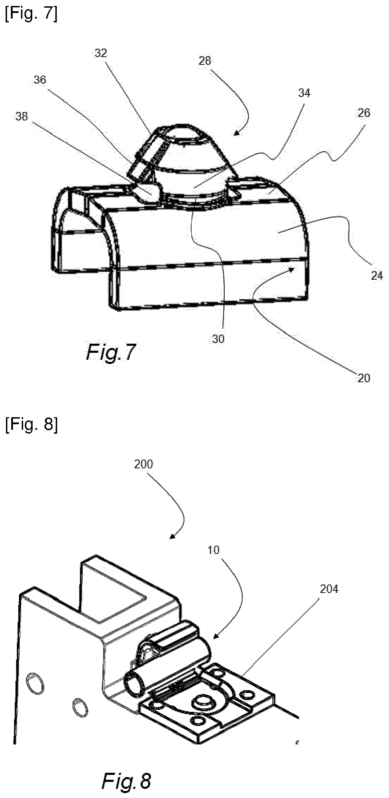

   [fig.7] représente une vue en perspective d'une variante de l'insert de la figure 6;
**Fig.8**
   [fig.8] représente une première étape de montage du dispositif de la figure 1 ;
**Fig.9**

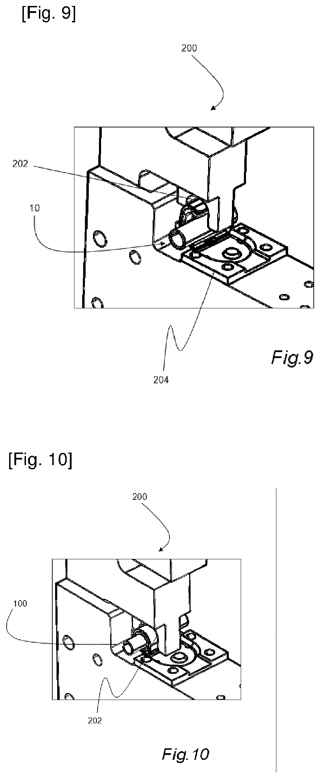

   [fig.9] représente une deuxième étape de montage du dispositif de la figure 1 ;
**Fig.10**
   [fig.10] représente une troisième étape de montage du dispositif de la figure 1.

### Description des modes de réalisation

La figure 1 est une illustration d'un ensemble de collier de serrage de l'invention. L'ensemble de collier de serrage est désigné par la référence générale 10. Dans le mode de réalisation illustré sur la figure 1, l'ensemble de collier de serrage 10 est utilisé pour supporter un article tubulaire tel que le tube 100 qui peut être un tube rigide, un tuyau flexible ou un câblage électrique parmi d'autres composants.

Dans d'autres modes de réalisation, le tube 100 peut être remplacé par tout autre type d'élément à supporter. Dans cet exemple, l'ensemble de collier de serrage 10 est destiné à maintenir une conduite de refroidissement, une conduite de carburant ou une conduite de frein d'une automobile.

Selon l'invention, l'ensemble de collier de serrage 10 comprend une zone de serrage 12 ou logement de forme générale annulaire sensiblement cylindrique configurée pour être engagée autour de l'article 100.

L'ensemble de collier de serrage 10 comprend également une patte de fixation 14 agencée pour fixer l'article tubulaire 100 à un support externe (non illustré), par exemple un équipement d'un véhicule automobile par différentes techniques. Ces techniques de fixation au support peuvent comprendre, sans s'y limiter, le collage, le brasage ou le soudage. Dans le mode de réalisation préféré de l'invention, l'ensemble de collier de serrage 10 est fixé au support externe par exemple au moyen d'une fixation filetée.

De manière préférentielle, la patte de fixation 14 comprend dans cet exemple un ou plusieurs trous de fixation 16. Par exemple, ce trou de fixation 16 permet de fixer l'ensemble de l'assemblage 10 à une structure de support externe, par exemple un châssis ou un bloc moteur, au moyen d'un élément de fixation tel qu'une vis (non illustrée).

En référence aux figures 1 et 2, l'ensemble de collier de serrage 10 comprend un insert 20 déformable pour définir la zone ou cavité de serrage 12 sensiblement cylindrique destinée à recevoir l'élément tubulaire 100. L'ensemble 10 comprend en outre un corps métallique périphérique 22 ou corps d'enveloppement 22 plié pour former un évidement en forme générale de « U » à l'intérieur duquel l'insert 20 est enveloppé.

L'insert 20 est dimensionné pour se fixer au support d'enveloppement 22 et pour se conformer au diamètre extérieur du tube 100. L'insert 20 est par exemple réalisé dans un matériau élastomère moulé. Le type de matériau élastomère et la dureté peuvent être choisis en fonction des exigences d'une application spécifique.

L'insert 20 est moulé dans une position ouverte illustrée par exemple sur les figures 4 à 6 et est déformable de manière élastique entre cette position ouverte (état non déformé) et une position fermée (état déformé).

En position ouverte, l'insert 20 présente une forme générale semi-tubulaire de section transversale en forme de U comportant un fond 26 et des parois latérales 24. L'insert 20 est ouvert sur sa longueur. L'insert 20 est conçu de telle sorte que lorsqu'il est fermé, comme on le voit sur la figure 1 ou 2, l'insert 20 prend de préférence une forme générale cylindrique ayant une section transversale ronde avec un diamètre intérieur circulaire qui forme la cavité cylindrique de l'ensemble de collier de serrage 10.

En référence à la figure 6, l'insert 20 comprend une projection radiale 28 s'étendant radialement vers l'extérieur de l'insert 20. La projection radiale 28 s'étend à partir d'une partie médiane du fond 26 de l'insert 20.

Comme on peut le voir sur la figure 4 ou 5, le corps d'enveloppement 22 fournit une partie incurvée ou enveloppante en forme générale de U dans laquelle un orifice 23 est ménagé. L'orifice 23 est dimensionné pour recevoir la projection radiale 28 et est configurée pour coopérer avec la projection 28 afin de positionner l'insert 20 par rapport au corps enveloppant 22.

La projection 28 comprend une base 30 fixée à l'insert 20 et une tête 32 reliée à ladite base 30 par une partie 34 de connexion s'étendant radialement. La projection 28 est pourvue, à la périphérie de la tête 32, d'un bord de clipsage en saillie 36 pour maintenir en place l'insert 20 par rapport au corps d'enveloppe métallique 22.

La projection radiale 28 facilite le maintien de l'insert 20 à l'intérieur du corps d'enveloppe 22 en position ouverte. La projection radiale 28 est dimensionnée de telle sorte que la dimension dans au moins une direction de la tête 32 est supérieure à la largeur de la fente ou orifice 23 du corps de l'enveloppe de serrage 22. Par conséquent, en cours d'utilisation, la tête 32 se déforme temporairement pour passer à travers la fente 23, puis la tête 32 reprend sa forme initiale pour retenir l'insert 20 sur le corps d'enveloppe 24. La projection 28 retient l'insert 20 à l'intérieur du corps d'enveloppement 22, ce qui permet à l'ensemble de collier de serrage 10 d'être livré pré-assemblé dans une position ouverte (FIGS.4-5).

L'ensemble de collier de serrage 10 est configuré pour être fermé autour de l'article tubulaire 100 par un outil de formage 200 de manière à être plié autour de l'article 100.

De manière préférentielle, l'insert 20 comprend, au niveau de la base 30 de la projection radiale 28, un trou traversant 38 aligné radialement sous le bord de clipsage en saillie 36.

Dans l'exemple illustré sur les figures, la tête 32 de la projection 28 comprend de préférence deux bords saillants de clipsage 36 en vis-à-vis selon le sens de la longueur de la projection 28. De préférence, l'insert 20 comprend, à la base 30 de la projection 28, deux trous traversants latéraux 38 alignés radialement sous chacun des deux bords de clipsage saillants 36. Bien entendu, l'insert 20 peut comprendre un ou plusieurs trous traversants 38 ainsi qu'un ou plusieurs bords saillants de clipsage 36 sans sortir du cadre de l'invention.

De préférence, les trous traversants latéraux 38 sont réunis et forment un seul trou traversant s'étendant sous la surface de la tête 32. Le trou traversant unique a dans cet exemple une forme oblongue avec une direction longitudinale s'étendant selon les bords de clipsage saillants 36.

La portion de connexion 34 relie radialement la tête 32 selon un profil extérieur dépourvu de tout bord ou épaulement. La partie de connexion 34 comprend par exemple deux sections de jupe flexible 40 disposées autour de l'unique trou traversant 38 et en relation de face à face opposée selon une direction de largeur de la tête 32.

Le contour de la tête 32 est inscrit à l'intérieur du trou traversant 38. De préférence, le contour du trou traversant 38 suit sensiblement le contour de la tête 32. La tête 32 est formée par exemple par un corps creux et s'étend au-dessus du trou traversant 38 de l'insert 20. La tête 32 s'étend au-dessus du trou traversant 38 et la partie de connexion 34 relie latéralement la tête 32 à la base 30 en périphérie du trou traversant 38.

La tête 32 de la saillie 28 a de préférence une forme de solide avec quatre côtés latéraux. Dans l'exemple décrit, la tête 32 comprend deux côtés opposés se prolongeant latéralement par les deux rebords de clipsage saillants 36 et les deux autres côtés opposés se prolongeant latéralement par les deux sections de jupe flexibles 40 formant la portion de connexion 34. La forme solide a dans le présent exemple comme cela est illustré aux FIGS.1-6 une forme générale de cube. De préférence, au moins un rebord de clipsage 36 a un profil en forme générale de rampe inclinée facilitant l'introduction progressive de la tête 32 au travers de la fente 23.

De préférence, la portion de connexion flexible 34 a une forme de membrane qui peut s'étirer et fléchir pendant l'insertion pour permettre aux rebords de flexion 36 de venir s'accrocher au travers de l'orifice 23 ménagé dans le corps d'enveloppe 22.

Dans la variante illustrée à la figure 7, la tête 32 de la saillie 28 peut avoir une forme globalement de pyramide quadrilatérale tronquée ou peut avoir toute autre structure ou forme permettant de réaliser la fonction de clipsage.

De préférence, l'insert 20 dans son ensemble est réalisé par moulage par injection d'une matière plastique élastomère dans une cavité libre de moulage d'une matrice de moulage (non représentée).

Pour la fabrication d'un tel insert 20, on procède comme suit. On prévoit une matrice de moulage comprenant un moule, par exemple en deux parties afin de délimiter au moins une cavité libre de moulage à l'intérieur de laquelle peut être injectée une matière plastique à l'état fondu. Cette cavité libre de moulage est configurée pour conformer l'insert avec la projection 28.

On ferme ensuite le moule et on injecte dans le moule une matière plastique à l'état fondu. Cette matière plastique remplit la cavité libre du moule. Une fois l'étape d'injection terminée, on ouvre le moule pour extraire l'insert moulé 20. Grâce à la présence d'au moins un trou traversant 38 s'étendant sous le rebord saillant 36 de la tête 32 de la projection 28, le procédé de moulage est très simplifié car le retrait du moule est facilité par la présence du trou traversant 38.

Les FIGS. 8 à 10 illustrent une partie du procédé d'assemblage de l'ensemble de collier de serrage selon l'invention.

La figure 8 illustre une première étape consistant à placer le support de serrage métallique 22 dans un outil de formage 200 qui comprend un support 204 où l'ensemble de support 10 est positionné. Le support 204 comprend un axe ou un dispositif mécanique qui coopère avec le trou supplémentaire 16 de l'ensemble de support 10.

De plus, comme illustré sur la figure 9, l'outil de formage 200 comprend une pince de déformation 202 en forme de U qui comprend une surface de déformation destinée à appliquer une force de serrage sur le corps de l'enveloppe du support 22 conduisant à sa déformation plastique et à la déformation de l'insert élastomère 20 de l'ensemble de support 10. Ensuite, l'élément tubulaire 100 est placé dans l'espace de fixation de l'insert élastomère 20 de l'ensemble de support 10.

La figure 10 illustre ensuite une dernière étape consistant à actionner l'outil de formage 200 pour déformer plastiquement la deuxième extrémité du support métallique 22 autour de l'élément de tubage 100 et pour saisir l'élément de tubage 100, l'insert élastomérique 20 étant simultanément plié afin d'entourer l'élément de tubage 100.

Bien entendu, l'invention ne se limite pas aux modes de réalisation précédemment décrits. D'autres modes de réalisation à la portée de l'homme du métier peuvent aussi être envisagés sans sortir du cadre de l'invention définie par les revendications ci-après. En particulier, la forme générale de la tête peut être cylindrique, oblongue, de section transversale ovale. Le nombre de rebords saillants peut être de un ou de plusieurs sans sortir du cadre de l'invention. 1

## Revendications

1. Ensemble de collier de fixation (10) d'au moins un article tubulaire (100) à un support externe, du type comprenant un insert (20) déformable pour définir une cavité sensiblement cylindrique (12) configurée pour recevoir l'article tubulaire (100) et un corps métallique d'enveloppe (22) délimitant un siège sensiblement à l'intérieur duquel l'insert (20) est enveloppé autour de l'article (100), l'insert (20) comprenant une projection externe (28) qui s'étend radialement vers l'extérieur de l'insert (20) et est configurée pour coopérer avec un orifice (23) correspondant formé dans le siège du corps métallique de façon à positionner l'insert (20) à l'intérieur du corps (22), la projection (28) comprend une base (30) attachée à l'insert (20) et une tête (32) connectée à la base (30) par une partie de liaison (34) d'extension radiale et pourvue en périphérie de la tête (32) d'un bord saillant de clipsage (36) configuré pour retenir l'insert (20) à l'intérieur du corps métallique d'enveloppe (22), **caractérisé en ce que** l'insert (20) comprend, à la base (30) de la projection (28), un trou traversant (38) s'étendant à l'aplomb du rebord de clipsage (36).

2. Ensemble (10) selon la revendication précédente, dans lequel la partie de liaison (34) connecte radialement la tête (32) selon un profil externe dépourvu de tout bord ou épaulement.

3. Ensemble (10) selon l'une quelconque des revendications précédentes, comprenant deux bords saillant de clipsage (36) en vis-à-vis l'un de l'autre et deux trous traversants (38) correspondants formés dans ladite base (30).

4. Ensemble (10) selon l'une quelconque des revendications précédentes, comprenant deux rebords de clipsage (36) en vis-à-vis l'un de l'autre et deux trous traversants latéraux (38) alignés radialement sous chacun des rebords (36) qui sont réunis et forment un trou traversant unique s'étendant sous la surface de la tête (32).

5. Ensemble (10) selon la revendication précédente, dans lequel la partie de liaison (34) comprend deux sections de jupes flexibles (40) disposées autour du trou traversant unique formés par la réunion des deux trous traversants (38) et en vis-à-vis l'une de l'autre.

6. Ensemble (10) selon l'une quelconque des revendications précédentes, dans lequel la partie de liaison (34) se présente sous la forme d'une membrane de jonction de la tête (32) et de la base (30) de l'insert (20).

7. Ensemble (10) selon l'une quelconque des revendications précédentes, dans lequel la tête (32) est formée par un corps creux.

8. Ensemble (10) selon l'une quelconque des revendications précédentes, dans lequel la tête (32) s'étend sensiblement dans le prolongement radial du trou traversant (38) et la partie de liaison (34) relie la tête (32) à la base (30) en périphérie du trou traversant (38).

9. Ensemble (10) selon l'une quelconque des revendications précédentes, dans lequel la tête (32) est supportée à distance radiale de ladite base (30) par la partie de liaison (34) et s'étend sensiblement sur toute la surface du trou traversant (38).

10. Ensemble (10) selon l'une quelconque des revendications précédentes, dans lequel la tête (32) de la projection (28) présente une forme de solide avec quatre côtés latéraux, deux côtés opposés se prolongeant latéralement par deux bords saillants de clipsage (36) et les deux autres côtés opposés se prolongeant latéralement par deux tronçons flexibles de jupe (40) formant la partie de liaison (34).

11. Ensemble (10) selon l'une quelconque des revendications précédentes, dans lequel l'insert (20) est élastiquement déformable entre une position ouverte non déformée et une position fermée déformée, l'insert (20) présentant en position ouverte une forme générale semi-tubulaire de section en U ayant un fond (26) et des parois latérales (24), la projection (28) étant portée par le fond (26) de l'insert (20).
